**Europäisches Patentamt**

**European Patent Office**

**Office européen des brevets**

(19)

(11) Veröffentlichungsnummer: **0 002 448 B1**

# EUROPÄISCHE PATENTSCHRIFT

(12)

(45) Veröffentlichungstag der Patentschrift: **25.11.81**

(51) Int. Cl.³: **G 07 C 5/00, G 01 D 11/26**

(21) Anmeldenummer: **78101355.2**

(22) Anmeldetag: **11.11.78**

(54) Anordnung zum Befestigen der Frontscheibe eines Fahrtschreibers.

(30) Priorität: **09.12.77 DE 2754808**

(43) Veröffentlichungstag der Anmeldung:
**27.06.79 Patentblatt 79/13**

(45) Bekanntmachung des Hinweises auf die Patenterteilung:
**25.11.81 Patentblatt 81/47**

(84) Benannte Vertragsstaaten:
**DE FR GB**

(56) Entgegenhaltungen:
DE - U - 1 352 977
FR - A - 2 167 150
FR - A - 2 289 979
US - A - 2 335 063
US - A - 3 889 840
US - A - 4 092 866

(73) Patentinhaber: **Kienzle Apparate GmbH**
**Heinrich-Hertz-Strasse Postfach 1650**
**D-7730 Villingen-Schwenningen (DE)**

(72) Erfinder: **Modest, Otmar**
**Herrenstrasse 5**
**D-7734 Brigachtal (DE)**
Erfinder: **Zimmermann, Hans**
**Brückenstrasse 22**
**D-7220 VS-Schwenningen (DE)**

Courier Press, Leamington Spa, England.

Anordnung zum Befestigen der Frontscheibe eines Fahrtschreibers

Die Erfindung betrifft eine Anordnung zum Befestigen der Frontscheibe eines Fahrtschreibers mit einem der Frontscheibe zugeordneten elastischen Element und mit einem das Gehäuse des Fahrtschreibers, an dessen Rand eine dem elastischen Element und der Frontscheibe zugeordnete Fassung mit einer in axialer Richtung als Auflage dienenden Schulter ausgeformt ist, die Frontscheibe und das elastische Element miteinander verbindenden Halter, wobei die Frontscheibe lose in die Fassung einlegbar ist und der den Rand des Gehäuses umgreifende Halter einerseits mit dem Gehäuse verrastbar ist, andererseits mittels eines an ihm ausgebildeten Randes die Frontscheibe in axialer Richtung federungsfähig festhält.

Aus der Vielzahl der bekannten Anordnungen zum Befestigen derartiger Frontscheiben an anzeigenden Meßgeräten sei eine dem nächstliegenden Stand der Technik zuzuordnende Anordnung herausgegriffen und näher betrachtet. Es handelt sich bei dieser Anordnung um die gleiche Bauelementekombination, wie sie der Oberbegriff des Anspruches 1 der vorliegenden Erfindung beschreibt, d.h. um eine Anordnung bestehend aus einem Gehäuse, einer Frontscheibe, einem federnden bzw. elastischen Element und einem Halter, welcher bei zylindrischem Gehäuse beispielsweise auch als Spannring bezeichnet werden könnte, wobei als elastiches Element beispielsweise ein Gummiring bzw. ein Ring aus einem gummiähnlichen, elastischen Material Anwendung findet.

Zunächst sei jedoch hinsichtlich der oben genannten Anordnungen darauf hingewiesen, daß andere, dem selben Zweck dienende Anordnungen ohne Halter, auf deren detaillierte Beschreibung in diesem Zusammenhang verzichtet werden kann, bekannt sind, welche, was die Anzahl der erforderlichen Bauelemente anbelangt, zweifellos Vorteile bieten, auf der anderen Seite aber enge Fertigungstoleranzen erforderlich machen, klimaempfindlich sind und vielfach erheblich montagetechnische Nachteile aufweisen.

Im Gegensatz hierzu läßt sich durch die an sich bekannte Anwendung eines Spannringes, der in geeigneter Weise mit dem Gehäuse verrastbar ausgebildet ist und auf dessen Verwendung bei den Anordnungen mit verringertem Bauelementeaufwand verzichtet wurde, am ehesten eine werkzeuglose Montage der einzelnen Bauelemente bei maximaler Eingriffssicherheit verwirklichen.

Als vorrangige Aufgabe des in dieser Anordnung wirksamen elastischen Elementes galt es bisher, die Anzeigeorgane des betreffenden Meßgerätes vor dem Eindringen von Staub und Feuchtigkeit zu schützen. Zweitrangig war es, die Frontscheibe elastisch zu lagern und klima- und fertigungsbedingte Maßschwankungen aufzufangen.

Solange bei dieser Anordnung Gehäuse und Spannring aus einem metallischen Werkstoff gefertigt waren und für die Frontscheibe Silikat-Glas verwendet wurde, konnte auch bei Meßgeräten mit verhältnismäßig großem Gehäusedurchmesser und vielfach extrem rauhen Betriebsbedingungen, so beispielsweise bei Fahrtschreibern, das elastische Element als Gummiring ausgebildet werden.

Stellvertretend hierfür sei beispielsweise eine Anordnung gemäß der US—A—2 335 063 genannt, bei der als elastisches Element ein Schlauchring Anwendung findet, wobei zur besseren Montage diesem Schlauchring eine zusätzliche Versteifungseinlage zugeordnet ist.

Neuerdings werden jedoch sowohl für die Frontscheibe und den Spannring als auch für das Gehäuse eines Fahrtschreibers mehr und mehr Kunststoffe eingesetzt. Den dadurch zwangsläufig vorzusehenden, vergrößerten Fertigungstoleranzen und durch klimatische Einflüsse hervorgerufenen Maßschwankungen sowie den in der Großserienfertigung üblichen Montageerwartungen hinsichtlich Handhabung und erforderlichen Werkzeugbedarf konnte die bisherige Bauelementekombination unter Verwendung eines Gummiringes nicht mehr gerecht werden. Das heißt, daß abgesehen von den an sich bekannten Alterungserscheinungen und dem Elastizitätsschwund bzw. der Verhärtung eines Gummiringes bei tiefen Temperaturen, das insbesondere bei Kunststoffteilen erforderliche Ausgleichen von Maßabweichungen nicht mehr mit ausreichender Sicherheit möglich ist, wenn dies ausschließlich mit der Stoffelastizität eines aus Gummi oder einem anderen elastomeren Material gefertigten Ringes bewirkt werden soll. Außerdem verhindern derart flexible Teile, die beim Montieren des Meßgerätes vielfach durch Kleben fixiert oder in geeignete Halterungen eingesetzt werden müssen, einen zügigen Arbeitsfluß. Auch konstrucktive Einschränkungen müssen bei Verwendung eines Gummiringes in Kauf genommen werden, indem beispielsweise bei gegebenem Geräteaußendurchmesser der zur Verfügung stehende und für die Anzeigeelemente nutzbare Innendurchmesser verringert ist, wenn der Gummiring so angeordnet und durch geeignet ausgebildete Gahäusekonturen gefaßt wird, daß kein radiales Ausquetschen des Gummiringes erfolgen kann. Darüber hinaus entspricht beispielsweise ein Gummiring, möglicherweise ein solcher mit einem für den Anwendungszweck speziell angepaßten Querschnitt, nicht den Grundsätzen einer Fertigungsoptimierung, da er im allgemeinen ein Fremdbezugsteil darstellt.

Mit dem DE—U—71 49 350 ist nun eine Anordnung bekannt geworden, die die aufgezählten Nachteile umgeht und dadurch gekennzeichnet ist, daß der Frontscheibe ein in das Gehäuse des Fahrtschreibers bzw. in das Gehäuse des Fahrtschreiberdeckels einsetzbarer ringförmiger Träger zugeordnet ist, der die Frontscheibe zentriert, gleichzeitig als Dichtelement dient und durch an ihm ausgebildete federnde Finger ein elastisches Festhalten der Frontscheibe ermöglicht.

Abgesehen von einer nicht zufriedenstellenden Raumnutzung im Randbereich des Fahrtschreiberdeckels ist als entscheidender Nachteil dieser Anordnung die verhältnismäßig umständliche Montage anzusehen, d.h. die Tatsache, daß nach dem Einsetzen der Frontscheibe in den Träger die federnden Finger zur Frontscheibe hin umgelegt werden müssen. Dies bedeutet einerseits zusätzlichen Montageaufwand, andererseits stellen die Filmgelenke zwischen den federnden Fingern und dem Träger Schwachstellen dar, die wegen des Bruchriskos in der Großserienfertigung zu viel Aufmerksamkeit bei der Handhabung erfordern. Da außerdem diese Finger wegen der hinsichtlich der Anzeigeelemente geforderten, möglichst großen Nutzung des Gehäuseinnendurchmessers nur verhältnismäßig kurz ausgebildet werden können, sind weitere funktionelle Nachteile insbesondere dann gegeben, wenn die übrigen Bauelemente dieser Anordnung in Kunststoff ausgeführt werden, d.h. größere Maßabweichungen auszugleichen sind. In diesem Falle können die federnden Finger infolge ihrer ungünstigen Abmessungen von vornherein derart stark belastet sein, daß sie bei ungünstigen Temperaturbedingungen bleibend verformt werden, also ihre Federungsfähigkeit verlieren und somit die Frontscheibe nicht mehr mit der auch hinsichtlich der Dichtwirkung erforderlichen Vorspannung festgehalten wird.

Als Stand der Technik erscheint außerdem erwähnenswert eine durch die DE—A—24 51 468 bekannt gewordene Anordnung, die zu jenem bereits eingangs beschriebenen Anordnungstyp zu zählen ist, der lediglich Gehäuse, elastisches Element und Frontscheibe als Bauelemente umfaßt.

Eine Würdigung dieser Anordnung ist zwar für den vorliegenden Gegenstand unerheblich, es sei jedoch dem Vorteil, weniger Bauelemente nötig zu haben, gegenübergestellt, daß, abgesehen von der erforderlichen und fertigungstechnisch unzweckmäßigen Innennut, das Gehäuse entweder elastisch verformbar sein muß, was beispielsweise durch einen trennbaren Boden erleichtert wird, oder daß die Montage dieser Anordnung ein besonderes Werkzeug zum Wölben der Frontscheibe, was die Verwendung von Silikat-Glas ausschließt, nötig macht.

Besonders nachteilig wirkt es sich aus, daß bei diesem Anordnungstyp infolge der geringen Eingriffstiefe der Frontscheibe in die Wandung des Gehäuses, wenn man die rauhen Betriebsbedingungen und den relativ großen Gehäusedurchmesser eines Fahrtschreibers berücksichtigt, nur eine geringe Sicherheit für das Festhalten der Frontscheibe gegeben ist. Andererseits ist bei dieser Anordnung ein elastisches Element angewandt worden, welches außer der reinen Stoffelastizität auch formelastische Eingenschaften aufweist und somit für den fertigungs- und temperaturbedingten Toleranzausgleich in gewisser Weise verwendbar wäre.

Abgesehen von der Bauform dieses Ringes, dessen Y-förmiges Querschnittprofil infolge der relativ kurzen Schenkel ähnlich wie die bereits beschriebenen federnden Finger wenig belastbar ist und bei vergleichbaren konstruktiven Verhältnissen auch nicht den maximal möglichen Hub liefert, muß dieser Ring, um bei den gegebenen Einbauverhältnissen mit relativ geringem Beschädigungsrisiko montierbar zu sein, überwiegend gummielastische Eigenschaften aufweisen, was, wie bereits beschrieben, wegen der mangelnden Steifigkeit wiederum seine Handhabung nachteilig beeinflußt.

Ziel der vorliegenden Erfindung war es daher, einer Anordnung zur Befestigung einer Frontscheibe eines Fahrtschreibers, bestehend aus der als optimal erkannten Bauelementekombination (Gehäuse, Frontscheibe, elastisches Element und Halter) in bezug auf die Großserienfertigung besser geeignet zu machen, wobei eine problemlose Montage durch konstruktiv einfache und fertigungsfreundliche Teile, letztlich aber auch die Möglichkeit, diese Teile werkzeuglos zusammenfügen zu können, angestrebt wurde. Weitere Ziele waren eine Minimierung des für den angestrebten Zweck erforderlichen Raumbedarfs und eine funktionelle Verbesserung der Anordnung, insbesondere hinsichtlich des elastischen Festhaltens der Frontscheibe, auch in den Fällen, bei denen größere Maßabweichungen zu erwarten sind.

Die erfindungsgemäße Lösung ist nun dadurch gekennzeichnet, daß das elastische Element aus formsteifem und elastisch federndem Material besteht und als tellerfederförmiger Ring ausgebildet ist, dessen Querschnittsmaß in radialer Richtung um ein Vielfaches größer ist als die Tiefe der Schulter, welcher Ring lose in die Fassung einlegbar ist.

Ein sich insbesondere auf einen Fahrtschreiber mit zylindrischem Gehäuse beziehendes Ausführungsbeispiel sieht vor, daß am äußeren Umfang des tellerfederförmigen Rings eine Mehrzahl von der Mantelfläche der Frontscheibe zugeordneter Finger ausgebildet ist und daß an dem als Fassung für den Ring und die Frontscheibe ausgebildeten Rand des Gehäuses den Fingern zugeordnete Aussparungen vorgesehen sind.

Der entscheidende Vorteil des Erfindungsgegenstandes ist seine besondere Eignung für die Großserienfertigung, indem ausschließlich fertigungsfreundliche, im Spritzgußverfahren herstellbaren Teil Anwendung finden können, wobei eine übersichtliche problemlose und letztlich von Hand durchführbare Montage gewährleistet ist und die geforderte Funktion hinsichtlich eines elastischen Festhaltens der Frontscheibe auch bei verhältnismäßig großen sowohl fertigungs- als auch klimabedingten Maßabweichungen in vollem Umfange erfüllt wird.

Trotz dieser Optimierung hinsichtlich Herstellung und Montage sowie Spielausgleich- und Dichtfunktion erfordert die erfindungsgemäße Anordnung, was als ein weiterer bemerkenswerter Vorteil anzusehen ist, sowohl in radialer Richtung als auch in bezug auf die Bauhöhe ein Minimum an Raumaufwand.

Die Verwirklichung des Erfindungsgedankens ist selbstverständlich nicht ausschließlich auf Geräte mit zylindrischem Gehäuse beschränkt, sondern auch bei anderen Gehäuseprofilen anwendbar. Insbesondere bei geringen Stückzahlen muß zumindest ein Teil der anwendbaren elastischen Elemente nicht notwendigerweise als Kunstoffformteile ausgebildet werden, sondern kann aus geeignetem Metallblech gefertigt sein.

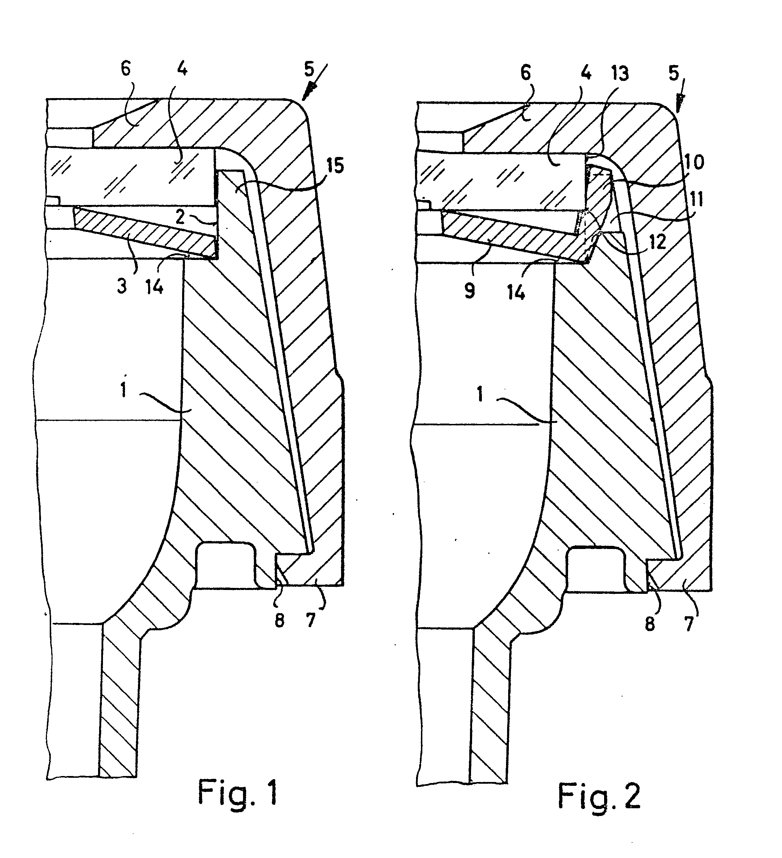

Im folgenden sei die Erfindung anhand der beigefügten Zeichnungen näher erläutert. Die Teilschnitte Fig. 1 und 2 durch die äußeren Randpartien eines Fahrtschreibers bzw. durch den Rand 15 dessen Deckels, der zum Zwecke des Wechselns von Aufzeichnungsträgern, im allgemeinen sind dies Diagrammscheiben, bekanntlich schwenkbar am eigentlichen Gehäuse des Fahrtschreibers gelagert ist, zeigen eine an dem üblicherweise topfförmig ausgebildeten Gehäuse 1 des Deckels ausgebildete Fassung mit einer zylindrischen Ausformung 2 und einer in axialer Richtung als Auflage dienenden Innenschulter 14, in die ein tellerfederförmig ausgebildeter Ring 3 und eine Frontscheibe 4 lose einlegbar sind. Ein im dargestellten Ausführungsbeispiel ringförmig ausgebildeter Halter 5, der den Fahrtschreiber nach außen ästhetisch abschließt und einerseits mit einem an ihm ausgebildeten Rand 6 auf der Frontscheibe 4 aufliegt, andererseits mit mehreren am Umfang verteilten Nasen, von denen in Fig. 1 und 2 eine mit — 7 — bezeichnet ist, in eine geeignete am Gehäuse 1 ausgebildete Ringschulter 8 eingreift, hält die Frontscheibe 4 unter der Wirkung des Ringes 3 elastisch am Gehäuse 1 fest.

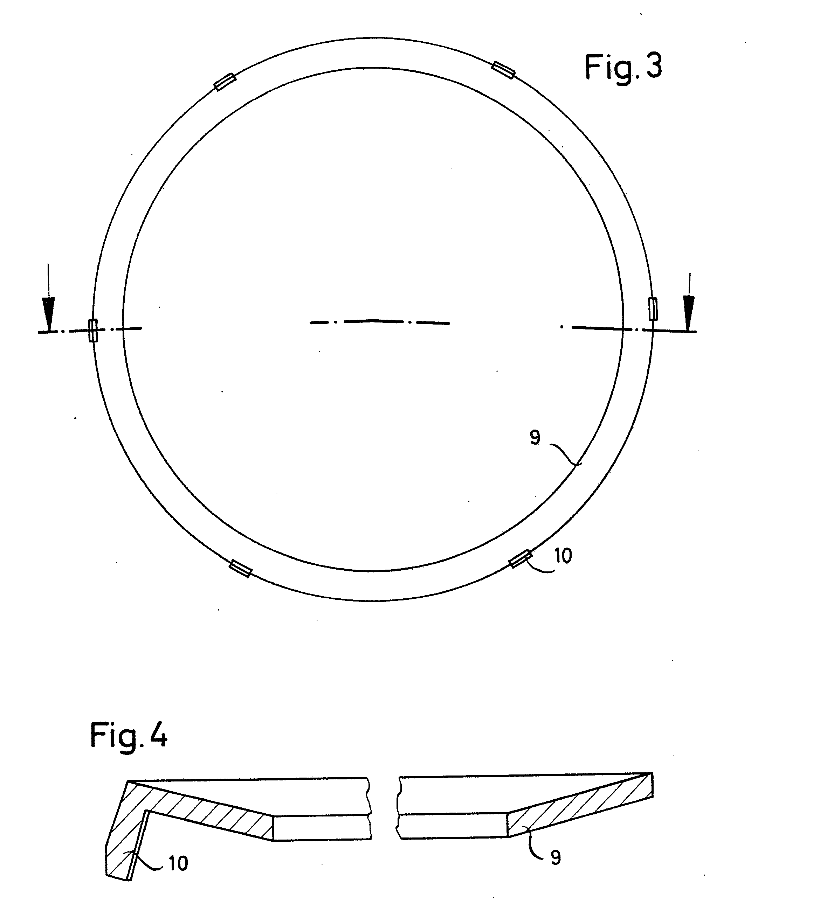

Bei einer besonderen, in Fig. 3 und 4 dargestellten und mit — 9 — bezeichneten Ausführungsvariante des Ringes 3 sind an dessen Umfang mehrere Finger 10 ausgebildet. Diese stellen zusammen mit den am Rand 15 des Gehäuses 1 angebrachten Aussparungen 11 eine Verdrehsicherung für den Ring 9 dar. Ferner sind diese Finger derart ausgebildet, daß sie zusätzlich eine Bremswirkung gegen Verdrehen der Frontscheibe 4 ausüben, indem die Frontscheibe 4 beim Anbringen des Spannringes 5 die Finger 10 sowohl in radialer Richtung nach außen drückt als auch, wie Fig. 2 zeigt, sich mit ihrer Kante 12 in das Material der Finger 10 eingräbt.

Auf diese Weise läßt sich die Frontscheibe 4, indem die Finger im wesentlichen an der Mantelfläche 13 der Frontscheibe 4 angreifen, ohne zusätzlichen Aufwand gegen Verdrehen in solchen Fällen sichern, in denen die Reibungsverhältnisse zwischen dem Halter 5, der Frontscheibe 4 und dem Ring 9 eine gewisse Verdrehbarkeit der Frontscheibe 4 erlauben würden, dies aber als störend empfunden wird.

### Patentansprüche

1. Anordnung zum Befestigen der Frontscheibe eines Fahrtschreibers mit einem der Frontscheibe (4) zugeordneten elastischen Element (3) und mit einem das Gehäuse (1) des Fahrtschreibers, an dessen Rand eine dem elastischen Element (3) und der Frontscheibe (4) zugeordnete Fassung mit einer in axialer Richtung als Auflage dienenden Schulter (14) ausgeformt ist, die Frontscheibe (4) und das elastische Element (3) miteinander verbindenden Halter (5), wobei die Frontscheibe (4) lose in die Fassung einlegbar ist, und der den Rand des Gehäuses (1) umgreifende Halter (5) einererseits mit dem Gehäuse (1) verrastbar ist, anderseits mittels eines an ihm ausgebildeten Randes (6) die Frontscheibe (4) in axialer Richtung federungsfähig festhält, dadurch gekennzeichnet, daß das elastische Element (3) aus formsteifem und elastisch federndem Material besteht und als tellerfederförmiger Ring ausgebildet ist, dessen Querschnittsmaß in radialer Richtung um ein Vielfaches größer ist als die Tiefe der Schulter (14), welcher Ring lose in die Fassung einlegbar ist.

2. Anordnung nach Anspruch 1, dadurch gekennzeichnet, daß am äußeren Umfange des tellerfederförmigen Ringes eine Mehrzahl von der Mantelfläche (13) der Frontscheibe (4) zugeordneter Finger (10) ausgebildet ist, und daß in dem als Fassung (2, 14) für den Ring (9) und die Frontscheibe (4) ausgebildeten Rand des Gehäuses (1) den Fingern (10) zugeordnete Aussparungen (11) vorgesehen sind.

### Revendications

1. Dispositif pour la fixation de la vitre frontale d'un enregistreur de route avec un élément élastique (3) associé à la vitre frontale (4) et avec un support assemblant l'ensemble comprenant le boîtier (1) de l'enregistreur de route, au bord duquel est formée une monture associée à l'élément élastique (3) et à la vitre frontale (4) avec un épaulement (14) servant de support dans le sens axial, la vitre frontale (4) et l'élément élastique (3), la vitre frontale (4) pouvant être placée de façon amovible dans la monture, et le support (5) entourant le bord du boîtier (1) étant, d'une part, verrouillable avec le boîtier (1) et retenant, d'autre part, au moyen d'un bord (6) dont il est pourvu, la vitre frontale (4) élastiquement dans le sens axial, caractérisé par le fait que l'élément élastique (3) est constitué d'un matériau de forme rigide et élastique et est réalisé comme anneau en forme de ressort à disque dont la dimension de section dans le sens radial est plusieurs fois supérieure à la profondeur de l'épaulement (14), lequel anneau pouvant être placé de façon amovible dans la monture.

2. Dispositif selon la revendication 1, caractérisé par le fait qu'au pourtour extérieur de l'anneau en forme de ressort à disque sont réalisés plusieurs doigts (10) associé de la surface cylindrique (13) à la vitre frontale (4), et que des évidements (11) associés aux doigts (10) sont prévus dans le bord du boîtier (1) servant de monture (2, 14) pour l'anneau (9) et la vitre frontale (4).

**Claims**

1. Device for fastening the front pane of a tachograph with an elastic element (3) attributed to the front pane (4) and with a supporting part (5) connecting the front pane and the elastic element, the housing (1) of the tachograph having a frame with a supporting shoulder (14) attributed to the elastic element (3) and the front pane (4) so that the front pane (4) may be loosely inserted into the frame, the supporting part (5) surrounding the rim of the housing and being latched on the one hand by the housing (1) on the other hand by means of a rim (6) provided thereon so that the front pane (4) is elastically supported in axial direction characterized in that the elastic element (3) is made of a form maintaining but elastic material in the form of a cup-shaped spring ring the extension of which in radial direction is a multiple of the width of the shoulder (14) which cup-shaped spring ring is loosely put into the frame.

2. Device according to Claim 1, characterized in that at the periphery of the cup-shaped spring ring a plurality of projections (10) are provided attributed to the peripheral surface (13) of the front pane (4) and in that at the rim of the housing (1) with the frame (2, 14) for the ring (9) and the front pane (4) there are recesses (11) corresponding to the projections (10).

Fig. 1

Fig. 2

Fig. 3

Fig. 4